# EUROPÄISCHE PATENTANMELDUNG

(11) **EP 2 186 591 A1**
(43) Veröffentlichungstag der Anmeldung: **19.05.2010**
(21) Anmeldenummer: 08400047.0
(22) Anmeldetag: 14.11.2008
(51) Int. Cl.: B23F 21/22, B23F 21/12

(54) **Messerkopf und Vefahren zum Herstellen eines Messerkopfes**

(71) Anmelder: Richardt, Renate, 99817 Eisenach (DE)
(72) Erfinder: Richardt, Rainer, 99817 Eisenach (DE)
(74) Vertreter: Steiniger, Carmen

(57) **Zusammenfassung**

Die vorliegende Erfindung betrifft einen Messerkopf mit einem ring- oder scheibenförmigen Messerträger mit kreisförmig daran angeordneten Messern sowie ein Verfahren zum Herstellen eines solchen Messerkopfes. Es ist die Aufgabe der vorliegenden Erfindung, einen Messerkopf und ein zugehöriges Verfahren zum Herstellen eines Messerkopfes zur Verfügung zu stellen, bei welchen möglichst viele Messer in einem Messerträger angeordnet werden können, um eine hohe Produktivität des Messerkopfes zu erreichen, und zudem der Aufwand zum Fixieren der Messer im Messerträger gesenkt oder gar eliminiert werden kann. Die Aufgabe wird zum einen durch einen Messerkopf der genannten Gattung gelöst, bei welchem die Messer einstückig mit dem Messerträger ausgebildet sind. Die Aufgabe wird ferner durch ein Verfahren zum Herstellen eines gattungsgemäßen Messerkopfes gelöst, wobei der Messerträger mit den Messern aus einem Rohling ausgebildet wird.

## Beschreibung

Die vorliegende Erfindung betrifft einen Messerkopf mit einem ring- oder scheibenförmigen Messerträger mit kreisförmig daran angeordneten Messern sowie ein Verfahren zum Herstellen eines solchen Messerkopfes.

Im Stand der Technik sind Stabmesserköpfe zum Verzahnen mit einem ringförmigen Messerträger mit kreisförmig angeordneten Durchbrüchen zur Aufnahme von Schäften von Stabmessern bekannt. Bei solchen Stabmesserköpfen sind radial ausgerichtete Bohrungen vorgesehen, in welchen Spannschrauben zur Fixierung der Stabmesser in den Durchbrüchen aufgenommen sind.

Beispielsweise ist in der Druckschrift DE 101 12 165 ein Stabmesserkopf beschrieben, bei welchem die Stabmesser in den Durchbrüchen mittels Keilen gehalten werden, wobei die Keile durch radial von außen in den Messerträger eingeführte Spannschrauben fixiert werden. Bei derartigen Stabmesserköpfen kann nur eine begrenzte Anzahl von Stabmessern zum Einsatz kommen, da der Platz für die Durchbrüche, in welche neben den Stabmessern noch die Keile eingeführt werden müssen, bereits relativ groß ist und darüber hinaus zwischen den Durchbrüchen ein Mindestabstand eingehalten werden muss, um dem Stabmesserkopf eine ausreichende Steifigkeit und Stabilität zu verleihen. Im Gegensatz dazu ist man jedoch bestrebt, möglichst viele Messer in einem Stabmesserkopf unterzubringen, um hierdurch die Produktivität des Stabmesserkopfes steigern zu können.

In der DE 10 2007 038 935 wurde daher ein Stabmesserkopf vorgeschlagen, bei welchem die Durchbrüche einen halbkreisförmigen Querschnitt aufweisen und wobei am Umfang des Messerträgers Spannplatten vorgesehen sind, die mit den Spannschrauben gegen die Schäfte der Stabmesser gedrückt werden. Bei dieser Ausgestaltung eines Stabmesserkopfes werden die Stabmesser durch den Druck der Spannplatten auf die Stabmesserschäfte in den Durchbrüchen fest fixiert. Somit sind bei derartigen Ausführungsformen Keile oder dergleichen zur Fixierung der Stabmesser nicht mehr notwendig. Entsprechend können relativ viele Stabmesser kreisförmig in dem Messerträger angeordnet werden, wodurch sich die Produktivität des Stabmesserkopfes erhöht.

Dennoch ist es auch bei der verbesserten Stabmesserkopfvariante erforderlich, dass die Stabmesser in den Durchbrüchen im Messerträger fest fixiert werden. Hierfür müssen die Spannplatten in den Messerträger eingebracht und diese mit Spannschrauben gegen die Schäfte der Stabmesser gedrückt werden. Dadurch ergibt sich ein entsprechender konstruktiver Aufwand, welcher mit entsprechenden Produktionskosten als auch der hierfür erforderlichen Zeit zum Fixieren der Stabmesser einhergeht.

Es ist daher die Aufgabe der vorliegenden Erfindung, einen Messerkopf und ein zugehöriges Verfahren zum Herstellen eines Messerkopfes zur Verfügung zu stellen, bei welchen möglichst viele Messer in einem Messerträger angeordnet werden können, um eine hohe Produktivität des Messerkopfes zu erreichen, und zudem der Aufwand zum Fixieren der Messer im Messerträger gesenkt oder gar eliminiert werden kann.

Die Aufgabe wird erfindungsgemäß durch einen Messerkopf der oben genannten Gattung gelöst, wobei die Messer einstückig mit dem Messerträger ausgebildet sind.

Da die Messer erfindungsgemäß mit dem Messerträger einstückig aus einem Rohling gefertigt sind, sind die Messer schon von Anfang an fest mit dem Messerträger verbunden, ohne dass die Messer in ihrer Position am Messerträger mittels zusätzlicher Hilfsmittel fixiert werden müssen. Dies erspart sowohl den Material- als auch den Arbeitsaufwand, der bei herkömmlichen Stabmesserk6pfen erforderlich ist, um die Stabmesser separat auszubilden, Durchgänge in dem Messerträger für die Stabmesser vorzusehen, die Stabmesser in den Messerträger einzupassen und darin zu fixieren. Im Ergebnis kann ein kompakter Messerkopf mit fest und stabil daran vorgesehenen Messern hergestellt werden. Da darüber hinaus keine Vorkehrungen am Messerträger, wie Keile oder dergleichen, zur Fixierung der Messer am Messerträger vorgesehen werden müssen und somit für solche Hilfsmittel kein Platz am Messerträger vorzusehen ist, kann der erfindungsgemäße Messerkopf mit einer Vielzahl von Messern hergestellt werden. Hierdurch besitzt der erfindungsgemäße Messerkopf eine hohe Produktivität.

In einer vorteilhaften Ausführungsform der vorliegenden Erfindung ist der Messerträger mit den Messern aus Hartmetall oder HSS ausgebildet. Hierdurch ergeben sich besonders gute Stabilitäts- und Steifigkeitswerte sowie eine hohe Schneidleistung für den erfindungsgemäßen Messerkopf.

In einer möglichen Variante der Erfindung ist der Messerträger etwa hülsen- oder ringförmig ausgebildet, wobei die Messer in axialer Richtung von einer Stirnseite des Messerträgers ragen. Ein solcher Messerkopf eignet sich insbesondere zum Verzahnen von Bauteilen, wie beispielsweise bogenverzahnten Kegelrädern. Der Einsatz dieses Messerkopfes ist eine Alternative zu Wendeplatten-Messerköpfen.

Gemäß einer weiteren, ebenfalls vorteilhaften Ausführungsvariante der vorliegenden Erfindung ist der Messerträger etwa scheibenförmig ausgebildet, wobei die Messer in radialer Richtung von dem Messerträger ragen. Indem die Messer umfangsseitig aus dem Messerträger herausragen, vollführen die Messer bei einer Rotation des Messerkopfes eine geradlinige Bewegung, so dass mit dieser Ausführungsvariante ein Stirnfräser zur Herstellung gerader Verzahnungen oder Wellenprofile herstellbar ist.

Es hat sich zudem als vorteilhaft erwiesen, wenn der Messerträger mit einem Adapter für einen Anschluss an unterschiedliche Werkzeugmaschinenanschlussstellen bzw. Werkzeuganschlussmaße koppelbar ist. Auf diese Weise kann der Messerträger selbst klein und leicht gestaltet werden und ist darüber hinaus flexibel für einen Anschluss an verschiedene Werkzeugmaschinen geeignet. Vorzugsweise sollte der Anschlussadapter so gestaltet sein, dass er sich für einen Anschluss an mehrere, verschiedene Werkzeugmaschinen eignet. Es ist jedoch auch möglich, verschiedene Anschlussadapter entsprechend der vorgesehenen Werkzeugmaschine gegeneinander auszutauschen. Somit ist es möglich, den erfindungsgemäßen Messerkopf mit vielen gängigen Werkzeugmaschinen zu koppeln. Auch kann diese Ausführungsform der Erfindung dazu genutzt werden, einen automatisierten Werkzeugwechsel unter Nutzung eines Werkzeugmagazins durchzuführen.

Um einen Anschluss an einen Adapter vorzusehen, kann der Messerträger an seiner den Messern abgewandten Seite einen sich radial nach innen erstreckenden Absatz aufweisen, in welchem wenigstens eine Nut für einen Adapteranschluss vorgesehen ist. Diese Ausführungsvariante eignet sich insbesondere für solche Messerköpfe, bei welchen der Messerträger etwa hülsen- oder ringförmig ausgebildet ist, wobei die Messer in axialer Richtung von der Stirnseite des Messerträgers ragen. Hierbei kann der Adapter auf einfache Weise in der Nut fixiert werden, um mit dem Messerträger verbunden zu werden.

Gemäß einer anderen Ausführungsvariante der Erfindung ist es auch möglich, dass der Messerträger eine Innenbohrung mit wenigstens einer davon radial nach außen gehenden Nut für einen Adapteranschluss aufweist. Dieses Ausführungsbeispiel ist insbesondere für etwa scheibenförmige Messerträger geeignet, bei welchen die Messer in radiale Richtung von dem Messerträger ragen. Hier kann der Adapter zentral in die Innenbohrung des Messerträgers eingeführt und mittels der Nut(en) darin fixiert werden, um eine stabile Verbindung zwischen einem Adapter und dem Messerträger herzustellen.

Die Aufgabe der Erfindung wird ferner durch ein Verfahren zum Herstellen eines Messerkopfes mit einem ring- oder scheibenförmigen Messerträger mit kreisförmig daran angeordneten Messern gelöst, wobei der Messerträger mit den Messern aus einem Rohling ausgebildet wird.

Dadurch dass erfindungsgemäß der Messerträger gemeinsam mit den Messern aus einem Rohling ausgebildet wird, haben die Messer von vornherein mit dem Messerträger eine feste Verbindung, ohne dass die Messer separat in oder an dem Messerträger durch zusätzliche Hilfsmittel fixiert werden müssen. Damit sind die Messer nicht nur stabil mit dem Messerträger verbunden, sondern es können an dem Messerträger auch relativ viele Messer vorgesehen werden, da an dem Messerträger kein Platz für zusätzliche Fixierungsmittel für die Messer vorgesehen werden muss. Im Ergebnis entsteht durch das erfindungsgemäße Verfahren ein hochstabiler und dennoch kostengünstig herstellbarer Messerkopf.

Es ist besonders günstig, wenn der Messerträger mit den Messern aus einem Rohling aus Hartmetall ausgebildet wird. Hierdurch weist der mit dem erfindungsgemäßen Verfahren herstellbare Messerkopf besonders gute Stabilitäts- und Steifigkeitswerte auf. Durch den Einsatz von Hartmetall kann eine hohe Schneidleistung erreicht werden.

Gemäß einer möglichen Variante der Erfindung wird als Rohling ein etwa hülsen- oder ringförmiger Rohling verwendet. Der hülsen- oder ringförmige Rohling eignet sich insbesondere, um einen etwa hülsen- oder ringförmigen Messerträger auszubilden, von dessen Stirnseite die Messer in axialer Richtung ragen. Ein solcher Messerkopf kann als Stirnfräser zum Verzahnen, beispielsweise von bogenverzahnten Kegelradern, eingesetzt werden. Dieser Messerkopf ist eine Alternative zu den herkömmlichen Wendeplatten-Messerköpfen.

In einem weiteren Ausführungsbeispiel der vorliegenden Erfindung kann als Rohling ein etwa scheibenförmiger Rohling verwendet werden. Mit Hilfe des scheibenförmigen Rohlings kann ein etwa scheibenförmiger Messerträger ausgebildet werden, von welchem die Messer in radialer Richtung umfangsseitig ragen. Bei diesem Messerkopf führen die Messer bei einer Rotation des Messerkopfes eine geradlinige Bewegung aus, so dass hiermit gerade Verzahnungen oder Wellenprofile herstellbar sind.

Entsprechend einer vorteilhaften Weiterbildung der Erfindung werden in den Rohling zunächst Messerlücken eingebracht und daraufhin die Konturen der Messer erzeugt. Die Messerlücken definieren die späteren Lücken zwischen den Messern des Messerkopfes. Indem zunächst die Messerlücken erzeugt werden, kann der Materialabtrag, der bei dem Herstellen der Lücken zwischen den Messern als auch für das Herstellen des Profils der Messer anfällt, vorteilhaft auslaufen, so dass der Messerkopf in einem kontinuierlichen Prozess gefertigt werden kann. Die Herstellung eines solchen Messerkopfes und die Profilierung der Messer kann auf geeigneten CNC-Werkzeugschleifmaschinen mit verschiedenen Diamantschleifkörperprofilen erfolgen. Ebenso ist die Vorprofilierung durch Erodieren möglich.

Vorzugsweise umfasst das Erzeugen der Messerkonturen ein Schleifen einer Messeraußenkontur, ein Schleifen einer Messerinnenkontur und ein Abrunden von Messerspitzen der Messer. Dabei ist es besonders von Vorteil, wenn zunächst nacheinander alle Außenkonturen der Messer geschliffen werden, daraufhin nacheinander alle Innenkonturen der Messer geschliffen werden und letztlich nacheinander die Messerspitzen der Messer mit einem definierten Radius versehen werden. Dabei ist die Abfolge der Einzelprozesse grundsätzlich variabel. Das heißt, es ist auch möglich, das Schleifen der Messerinnenkontur vor dem Schleifen der Messeraußenkontur vorzunehmen. Somit können die erfindungsgemäßen Messerköpfe mit Messern ausgerüstet werden, die hinsichtlich ihrer Form mit den Messern bekannter Stabmesserköpfe vergleichbar sind. Da die Messer jedoch fest mit dem Messerträger aufgrund der einstückigen Ausbildung mit dem Messerträger verbunden sind, weist der erfindungsgemäße Messerkopf Stabilitäts- und Steifigkeitsvorteile gegenüber den bekannten Stabmesserköpfen auf.

Die an dem Messerkopf vorgesehenen Messer können jederzeit analog zu Stabmessern nachgeschliffen werden. Je größer die Topflange eines hülsen- oder ringförmigen Rohlings bzw. je größer der Radius eines scheibenförmigen Rohlings, um so mehr Nachschliffe können an den Messern des jeweiligen Messerkopfs vorgenommen werden.

Ein weiterer großer Vorteil dieser Messerkopfvariante ist, dass die Messerprofile komplett ohne Demontage in einem Prozess nachgeschliffen werden können. Dabei ist eine hohe Genauigkeit und Reproduzierbarkeit der Messerkonturen garantiert. Falls erforderlich lassen sich auch Modifikationen des Messerprofils einbringen. Das aufwendige Handling bei dem Profilieren, Demontieren und Montieren der einzelnen Stabmesser entfallt bei dieser Messerkopfvariante.

Gemäß einer günstigen Weiterbildung der vorliegenden Erfindung werden wenigstens die Messer außen beschichtet. Hierdurch kann die Standzeit des erfindungsgemäßen Messerkopfes erhöht werden.

Vorteilhafte Ausführungsformen der vorliegenden Erfindung, deren Merkmale und Vorteile werden im Folgenden anhand der Figuren der Zeichnung naher erläutert, wobei
- Figur 1: schematisch eine erste Ausführungsvariante eines erfindungsgemäßen Messerkopfes in einer perspektivischen Darstellung mit Blick auf die Messer zeigt;
- Figur 2: schematisch den Messerkopf aus Figur 1 in einer perspektivischen Ansicht mit Blick auf einen Adapter zeigt;
- Figur 3: schematisch den Messerkopf aus den Figuren 1 und 2 in einer Schnittdar- stellung von der Seite zeigt;
- Figur 4: schematisch den Messerkopf aus den Figuren 1 bis 3 in einer Schnittdar- stellung von vorn zeigt;
- Figur 5: schematisch eine Ausführungsvariante eines Messerträgers in einer pers- pektivischen Darstellung zeigt;
- Figur 6: schematisch eine weitere Variante des erfindungsgemäßen Messerkopfes in einer perspektivischen Darstellung mit Blick auf die Messer zeigt;
- Figur 7: schematisch den Messerkopf aus Figur 6 in einer perspektivischen Dar- stellung mit Blick auf einen Adapter zeigt;
- Figur 8: schematisch den Messerkopf aus den Figuren 6 und 7 in einer Schnittdar- stellung von der Seite zeigt;
- Figur 9: schematisch den Messerkopf der Figuren 6 bis 8 in einer Schnittdarstellung von vom zeigt;
- Figur 10: schematisch eine weitere Variante eines Messerträgers in einer perspekti- vischen Darstellung zeigt;
- Figur 11: schematisch eine Ausführungsvariante eines Messerträgerrohlings in einer perspektivischen Ansicht zeigt;
- Figur 12: schematisch eine weitere Ausführungsform eines Messerträgerrohlings in einer perspektivischen Ansicht zeigt; und
- Figur 13: eine mögliche Prozessabfolge des erfindungsgemäßen Verfahrens zeigt.

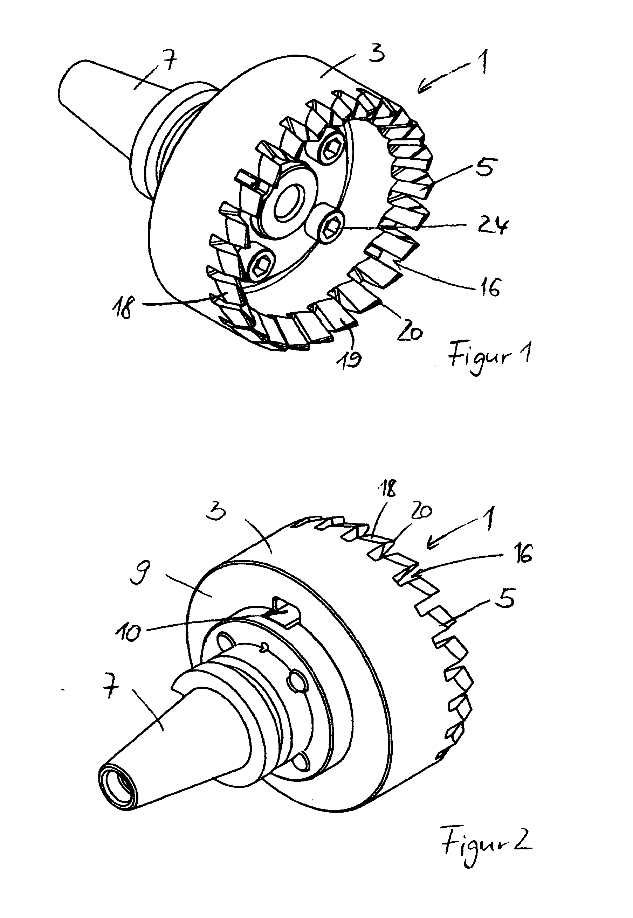

Figur 1 zeigt schematisch eine mögliche Ausführungsform eines erfindungsgemäßen Messerkopfes 1 in einer perspektivischen Ansicht mit Blick auf die Schneiden von Messern 5, die von einer Stirnseite des Messerkopfes 1 ragen.

Der Messerkopf 1 weist einen etwa hülsen- oder ringförmigen Messerträger 3 auf, wobei die Messer 5 in axialer Richtung des Messerkopfes 1 von der Stirnseite des Messerträgers 3 ragen. Die Messer 5 sind mit dem Messerträger 3 einstückig ausgebildet. Die Messer 5 weisen eine Messeraußenkontur 18, eine Messerinnenkontur 19 und eine leicht abgerundete Messerspitze 20 auf. Die Messerinnenkontur 19 und die Messeraußenkontur 18 verlaufen nach außen gehend aufeinander zu, so dass die Messer 5 nach außen hin zugespitzt sind. Hierdurch ergibt sich ein etwa dreieckiger Querschnitt der Messer 5 in Umfangsrichtung des Messerträgers 3. Zwischen den Messern 5 sind Messerlücken 16 vorgesehen, durch welche die einzelnen Messer 5 voneinander getrennt sind.

Figur 2 zeigt schematisch den Messerkopf 1 aus Figur 1 in einer perspektivischen Darstellung mit Blick auf einen Adapter 7, der mit dem Messerträger 3 gekoppelt ist. In der hier dargestellten Ausführungsvariante der Erfindung erfolgt die Kopplung zwischen dem Adapter 7 und dem Messerträger 3 über Nuten 10, 11, welche in einem sich radial nach innen erstreckenden Absatz 9 des Messerträgers 3 vorgesehen sind. Der Adapter 7 wird hierfür in die Nuten 10, 11 eingerastet und mittels Schrauben 24 fixiert.

Der Adapter 7 der Ausführungsvariante der Erfindung, die in den Figuren 1 und 2 dargestellt ist, stellt nur eine mögliche Ausführungsvariante eines Adapters dar. Er kann grundsätzlich auch anders ausgebildet sein. Der Adapter 7 des Messerkopfes 1 ist für einen Anschluss an unterschiedliche Werkzeugmaschinenschnittstellen bzw. Werkzeuganschlussmaße geeignet.

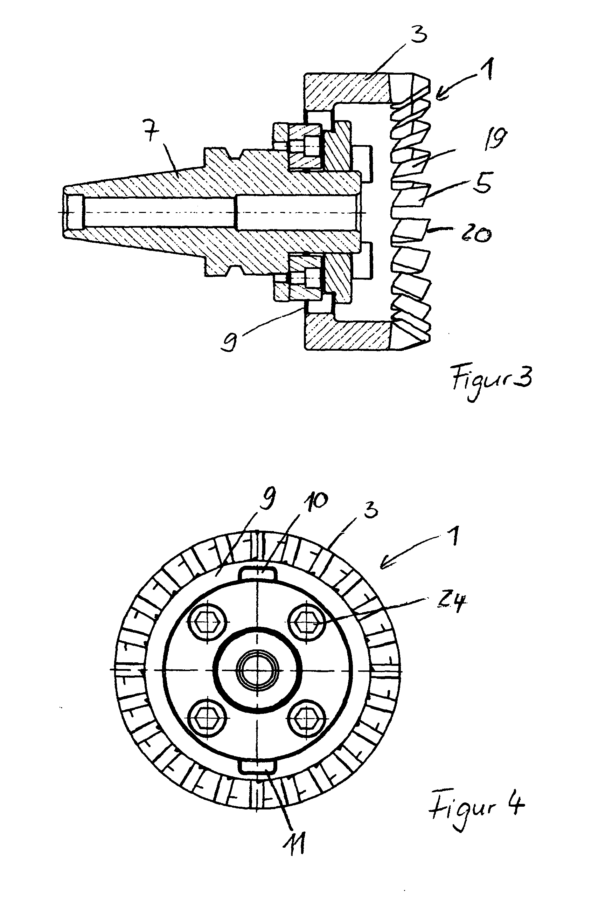

Figur 3 zeigt schematisch den Messerkopf 1 aus den Figuren 1 und 2 in einer Schnittdarstellung von der Seite.

Figur 4 zeigt schematisch den Messerkopf 1 aus den Figuren 1 bis 3 in einer Schnittdarstellung von vorn.

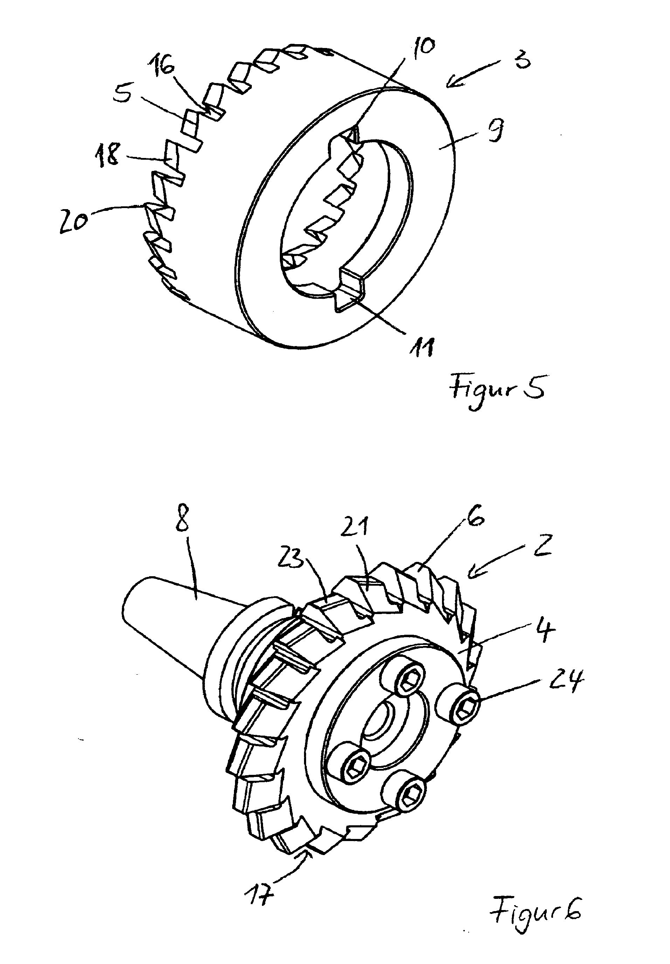

Figur 5 zeigt schematisch eine mögliche Ausführungsform eines Messerträgers 3 in einer perspektivischen Ansicht. In dem in Figur 5 gezeigten Beispiel entspricht der Messerträger 3 demjenigen Messerträger 3, der in dem Messerkopf 1 aus den Figuren 1 bis 4 zur Anwendung kommt.

Der Messerträger 3 ist einstückig mit den Messern 5 ausgebildet, wobei die Messer 5 in axialer Richtung von einer Stirnseite des Messerträgers 3 ragen. Der Messerträger 3 mit den Messern 5 ist aus Hartmetall ausgebildet. Wie in Figur 5 deutlich zu sehen, sind in einem sich radial nach innen erstreckenden Absatz 9 des Messerträgers 3 Nuten 10, 11 für einen Adapteranschluss vorgesehen.

Figur 6 zeigt schematisch eine weitere Ausführungsvariante eines erfindungsgemäßen Messerkopfes 2 in einer perspektivischen Ansicht mit Blick auf die Schneideinrichtung mit den Messern 6.

Der Messerkopf 2 weist einen etwa scheibenförmigen Messerträger 4 auf, von welchem die Messer 6 in radialer Richtung umfangsseitig ragen. Der Messerträger 4 ist mit den Messern 6 einstückig aus Hartmetall ausgebildet.

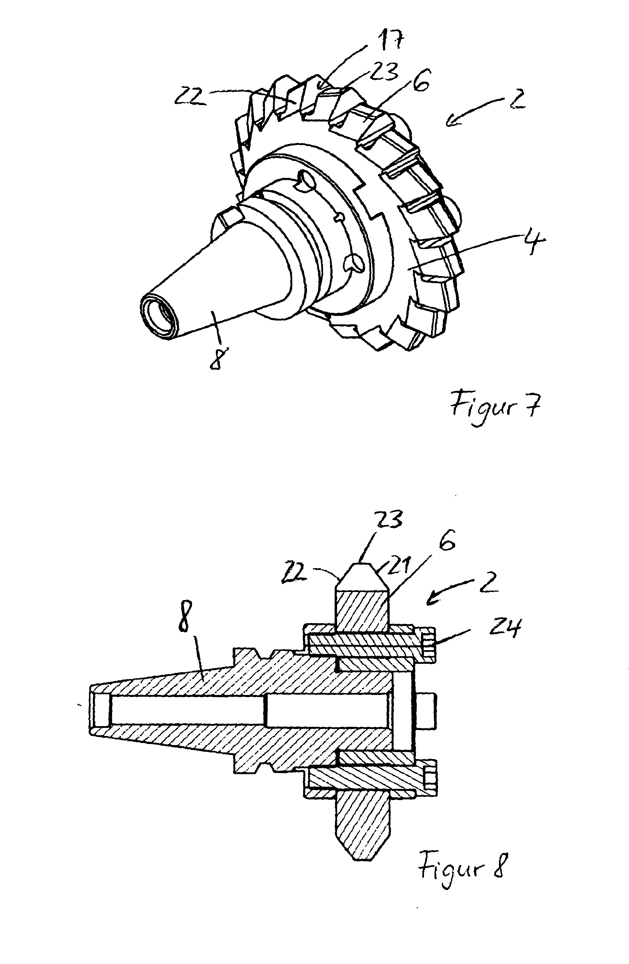

Figur 7 zeigt schematisch den Messerkopf 2 aus Figur 6 in einer perspektivischen Ansicht mit Sicht auf einen Adapter 8. Der Adapter 8 ist mit dem Messerträger 4 gekoppelt und für einen Anschluss an unterschiedliche Werkzeugmaschinenschnittstellen bzw. Werkzeuganschlussmaße geeignet.

Die von dem Messerträger 4 umfangsseitig weg ragenden Messer 6 weisen eine in Richtung des Adapters 8 zeigende Messerinnenkontur 22, eine von dem Adapter 8 abgekehrte Seite mit einer Messeraußenkontur 21 und eine in Umfangsrichtung des Messerträgers 4 verlaufende längliche, etwas abgerundete Messerspitze 23 auf. Zwischen den Messern 6 sind Messerlücken 17 vorgesehen, durch welche die einzelnen Messer 6 voneinander getrennt sind.

Da die Messerinnenkontur 22 und die Messeraußenkontur 21 der Messer 6 aufeinander zu laufen. haben die Messer 6 einen etwa dreieckigen Querschnitt, welcher grundsätzlich mit dem Querschnitt bekannter Stabmesser im Stand der Technik vergleichbar ist. Da die Messer 6 umfangsseitig aus dem Messerträger 4 herausragen, vollführen die Messer 6 bei einer Rotation des Messerkopfes 2 eine geradlinige Bewegung, so dass mit der in den Figuren 6 und 7 gezeigten Ausführungsvariante der Erfindung ein Stirnfräser zur Herstellung gerader Verzahnungen oder von Wellenprofilen herstellbar ist.

Figur 8 zeigt schematisch den Messerkopf 2 aus den Figuren 6 und 7 in einer Schnittansicht von der Seite.

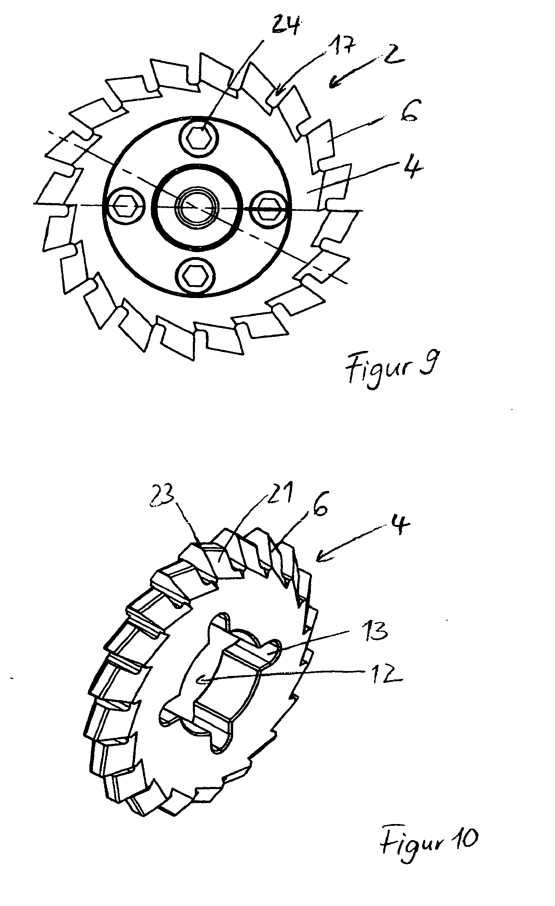

Figur 9 zeigt schematisch den Messerkopf 2 aus den Figuren 6 bis 8 in einer Schnittansicht von vorn.

Figur 10 zeigt schematisch eine Ausführungsvariante eines Messerträgers 4, wie er in dem Messerkopf 2 aus den Figuren 6 bis 8 zur Anwendung kommt. in einer perspektivischen Ansicht.

Wie in Figur 10 zu sehen, ist der Messerträger 4 einstückig mit den Messern 6 ausgebildet. Der Messerträger 4 weist eine Innenbohrung 12 mit davon nach außen ragenden Nuten 13 für einen Adapteranschluss auf. In die Innenbohrung 12 kann ein Adapter, wie der Adapter 8 aus den Figuren 6 und 7 eingeführt und durch die Nuten 13 zentriert werden, woraufhin der Adapter 8, wie in den Figuren 6 bis 9 gezeigt, mittels Schrauben 24 mit dem Messerträger 4 verbunden werden kann.

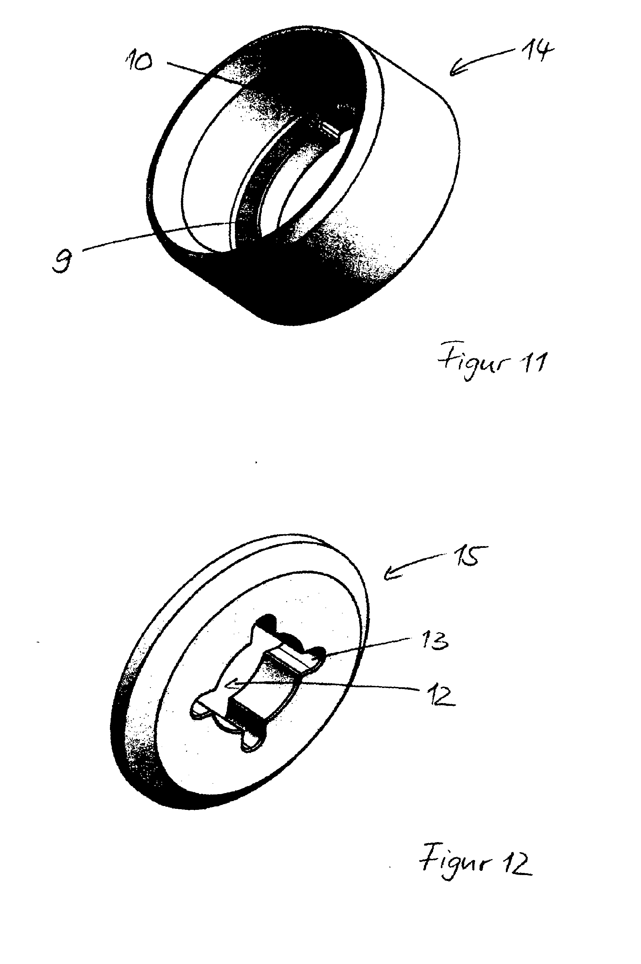

Figur 11 zeigt schematisch eine mögliche Ausführungsvariante eines Rohlings 14 zur Ausbildung eines hülsen- oder ringförmigen Messerträgers 3 mit Messern 5 wie in dem Messerkopf 1 aus den Figuren 1 bis 4. Der Rohling 14 besitzt eine Hülsen- oder Ringform mit einem einseitig vorgesehenen, sich radial nach innen erstreckenden Absatz 9, in welchem Nuten 10, 11 für einen Adapteranschluss vorgesehen sind. In die umfangsseitig verlaufende Hülsen- oder Ringform werden später Messerlücken 16 eingebracht, welche die Abstände zwischen den späteren Messern 5 definieren. Nachfolgend werden die Konturen 18, 19, 20 der Messer 5 aus den zwischen den Messerlücken 16 entstehenden Bereichen gefertigt.

Figur 12 zeigt schematisch eine weitere mögliche Ausführungsvariante eines Rohlings 15 zur Ausbildung eines etwa scheibenförmigen Messerträgers 4, von welchem die Messer 6 in radialer Richtung wegragen. Der Rohling 15 ist etwa scheibenförmig ausgebildet und weist eine Innenbohrung 12 mit sich davon radial nach außen erstreckenden Nuten 13 für einen Adapteranschluss auf. In den Rohling 15 werden zur Herstellung des Messerträgers 4 mit den Messern 6 zunächst umfangsseitig Messerlücken 17 eingebracht, welche die späteren Abstände zwischen den sich nach außen erstreckenden Messern 6 definieren. Daraufhin werden die Außen- und Innenkonturen 21, 22 der Messer 6 geschliffen und die Messerspitzen 23 der Messer 6 abgerundet.

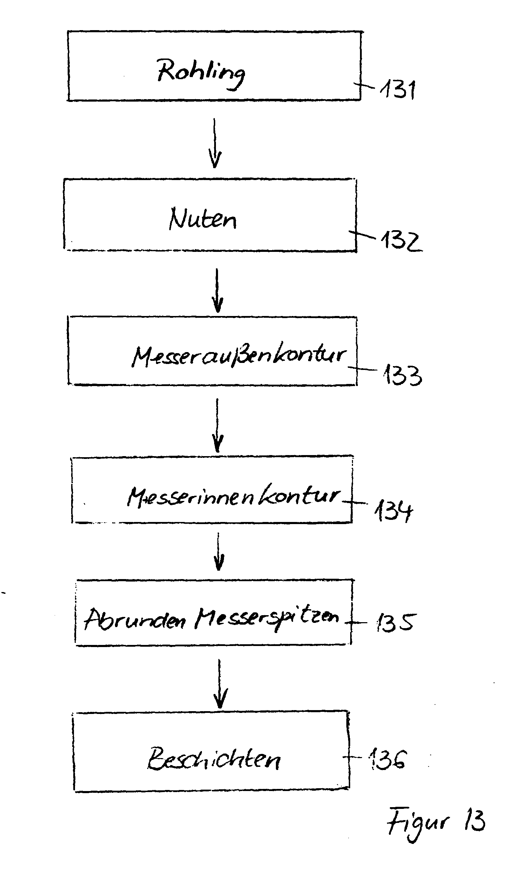

Figur 13 zeigt schematisch einen möglichen Prozessablauf zur Ausführung des erfindungsgemäßen Verfahrens zum Herstellen eines Messerkopfes 1, 2 mit einem ring- oder scheibenförmigen Messerträger 3, 4 mit kreisförmig daran angeordneten Messern 5, 6.

In einem ersten Verfahrensschritt 131 wird ein Rohling 14, 15 aus Hartmetall zur Verfügung gestellt. Als Rohling kann gemäß einer Variante der Erfindung ein etwa hülsen- oder ringförmiger Rohling 14 verwendet werden. In einer anderen Ausführungsform der vorliegenden Erfindung kann als Rohling ein etwa scheibenförmiger Rohling 15 verwendet werden.

In einem darauffolgenden Prozessschritt 132 werden in den Rohling 14, 15 Messerlücken 16, 17 eingebracht. Werden hülsen- oder ringförmige Rohlinge 14 verwendet, werden die Messerlücken 16 stirnseitig an einer Seite in die Hülse oder den Ring beispielsweise durch Schleifen oder Erodieren eingebracht. Bei der Verwendung von scheibenförmigen Rohlingen 15 werden die Messerlücken 17 umfangsseitig in die Rohlingscheibe beispielsweise durch Schleifen oder Erodieren eingebracht. Somit erstrecken sich die Messerlücken 16 bei hülsen- oder ringförmigen Rohlingen 14 im Wesentlichen in axialer Richtung des Rohlings 14, während sich die Messerlücken 17 bei der Verwendung von scheibenförmigen Rohlingen 15 im Wesentlichen radial erstrecken.

In einem weiteren Verfahrensschritt 133 wird aus dem zwischen den Messerlücken 16, 17 befindlichen Material die jeweilige Messeraußenkontur 18, 21 geschliffen. Hierfür wird nacheinander die Außenkontur 18, 21 jedes Messers 5, 6 an dem Messerträger 3, 4 geschliffen.

Daraufhin wird in einem weiteren Verfahrensschritt 134 die Messerinnenkontur 19, 22 der Messer 5,6 in den Messerträgern 3, 4 nacheinander geschliffen. Es ist jedoch auch möglich, dass das Schleifen der Messerinnenkontur 19,22 gemäß Schritt 134 vor dem Schleifen der Messeraußenkontur 18, 21 gemäß Schritt 133 erfolgt.

Daraufhin werden entsprechend Verfahrensschritt 135 die Messerspitzen 20, 23 der Messer 5, 6 abgerundet.

Abschließend werden gemäß Schritt 136 die Messerträger 3, 4 mit den Messern 5, 6 beschichtet, um die Standzeit der Messer zu verbessern. Grundsätzlich ist es jedoch auch ausreichend, wenn nur die Messer 5, 6 beschichtet werden. Die Beschichtung ist jedoch nicht zwingend erforderlich.

Die so hergestellten Messer 5, 6 an den Messerträgern 3, 4 können jederzeit analog zu Stabmessern nachgeschliffen werden. Je größer die Topflänge der hülsen- oder ringförmigen Rohlinge 14 bzw. je größer der Scheibendurchmesser der scheibenförmigen Rohlinge 15, um so mehr Nachschliffe sind möglich. Das Schleifen kann vorzugsweise mit Diamantschleifkörpern mit verschiedenen Scheibenprofilen ausgeführt werden.

Zum Einbringen der Nuten 16, 17 kommt vorzugsweise das Schleifen oder Erodieren zum Einsatz. Da die Messerlücken 16, 17 gemäß Schritt 132 von Figur 13 vor dem Herstellen der Messerkonturen erzeugt werden, ist der dadurch entstandene Freiraum zwischen den Messern 5, 6 für ein kollisionsfreies Schleifen der Messerprofile gegeben.

Die mit den Schritten gemäß Figur 13 hergestellten Messerträger 3, 4 können im Folgenden mit einem Adapter 7,8, wie in den Figuren 1 bzw. 6 gezeigt, gekoppelt werden. Hierdurch sind die erfindungsgemäßen Messerköpfe 1, 2 mit verschiedenen Werkzeugmaschinenanschlussstellen koppelbar.

Das erfindungsgemäße Verfahren eignet sich sowohl zur Neufertigung von Messerköpfen 1, 2 als auch zum Nachschleifen der Messer 5, 6 an bereits bestehenden Messerköpfen 1, 2.

Indem erfindungsgemäß die Messerträger 3, 4 als auch die Messer 5, 6 aus jeweils einem Rohling 14, 15 ausgebildet sind, können Messerträger 3,4 und Messer 5,6 von Anfang an in einem Stück gefertigt und später eingesetzt werden, wodurch sich sowohl Stabilitätsals auch Steifigkeitsvorteile für die erfindungsgemäßen Messerköpfe 1, 2 ergeben. Auch kann der Aufwand zur Herstellung separater Messer und deren Fixierung in den Messerträgem vollständig eliminiert werden, was die Produktivität bedeutend erhöht.

Der Aufwand für das Nachschleifen der Messerköpfe kann erheblich reduziert werden, da die Demontage, Montage und Justierung der herkömmlichen Stabmesser entfällt. Mit geeigneten 5-Achs-CNC-Werkzeugschleifmaschinen mit Scheibenwechslrn können diese Messerköpfe mit speziellen CNC-Programmen in einem Zyklus komplett automatisiert nachgeschliffen werden. Da der Messerkopf mit zugehörigem Adapter auf der CNC-Werkzeugschleifmaschine zum Nachschleifen aufgenommen werden kann, ergeben sich dadurch Vorteile bezüglich Genauigkeit, Präzision und Reproduzierbarkeit gegenüber den Stabmesserkopfvarianten. Da beim allseitigen Nachschleifen des Messerprofils die vorhandene Beschichtung mit abgeschliffen wird, kann beim Neubeschichten das vorherige Entschichten entfallen. Durch das Nachschleifen im kompletten Werkzeug system (Messerkopf + Adapter) können beim Nachschleifprozess bisher erforderliche Aufwendungen in der Peripherie (Werkze4gbeschickung; Prüf- und Montagevorrichtungen für einzelne Stabmesser sowie Spannvorrichtungen) entfallen.

Gegenüber herkömmlichen Stabmesserköpfen reduziert sich bei den erfindungsgemäßen ringförmigen Messerköpfen der äußere Durchmesser erheblich. Diese Reduzierung wirkt sich beim Einsatz auf CNC-Werkzeugmaschinen, wo der maximale Werkzeugumlaufdurchmesser limitiert ist, sehr günstig aus (automatisierte Werkzeugbeschickung und Platzverhältnisse im Werkzeugmagazin).

## Patentansprüche

1. Messerkopf (1, 2) mit einem ring- oder scheibenförmigen Messerträger (3, 4) mit kreisförmig daran angeordneten Messern (5, 6), **dadurch gekennzeichnet, dass** die Messer (5, 6) einstückig mit dem Messerträger (3, 4) ausgebildet sind.

2. Messerkopf nach Anspruch 1, **dadurch gekennzeichnet, dass** der Messerträger (3, 4) mit den Messern (5, 6) aus Hartmetall oder HSS ausgebildet ist.

3. Messerkopf nach Anspruch 1 oder 2, **dadurch gekennzeichnet, dass** der Messerträger (3) etwa hülsen- oder ringförmig ausgebildet ist, wobei die Messer (5) in axialer Richtung von einer Stirnseite des Messerträgers (3) ragen.

4. Messerkopf nach Anspruch 1 oder 2, **dadurch gekennzeichnet, dass** der Messerträger (4) etwa scheibenförmig ausgebildet ist, wobei die Messer (6) in radialer Richtung von dem Messerträger (4) ragen.

5. Messerkopf nach einem der vorhergehenden Ansprüche, **dadurch gekennzeichnet, dass** der Messerträger (3, 4) mit einem Adapter (7, 8) für einen Anschluss an unterschiedliche Werkzeugmaschinenanschlussstellen bzw. Werkzeuganschlussmaße koppelbar ist.

6. Messerkopf nach Anspruch 3, **dadurch gekennzeichnet, dass** der Messerträger (3) an seiner den Messern (5) abgewandten Stirnseite einen sich radial nach innen erstreckenden Absatz (9) aufweist, in welchem wenigstens eine Nut (10, 11) für einen Adapteranschluss vorgesehen ist.

7. Messerkopf nach Anspruch 4, **dadurch gekennzeichnet, dass** der Messerträger (4) eine Innenbohrung (12) mit wenigstens einer davon radial nach außen gehenden Nut (13) für einen Adapteranschluss aufweist.

8. Verfahren zum Herstellen eines Messerkopfs (1, 2) mit einem ring- oder scheibenförmigen Messerträger (3, 4) mit kreisförmig daran angeordneten Messern (5, 6), **dadurch gekennzeichnet, dass** der Messerträger (3, 4) mit den Messern (5, 6) aus einem Rohling (14, 15) ausgebildet wird.

9. Verfahren nach Anspruch 8, **dadurch gekennzeichnet, dass** der Messerträger (3, 4) mit den Messern (5, 6) aus einem Rohling (14, 15) aus Hartmetall oder HSS ausgebildet wird.

10. Verfahren nach Anspruch 8 oder 9, **dadurch gekennzeichnet, dass** als Rohling ein etwa hülsen- oder ringförmiger Rohling (14) verwendet wird.

11. Verfahren nach Anspruch 8 oder 9, **dadurch gekennzeichnet, dass** als Rohling ein etwa scheibenförmiger Rohling (15) verwendet wird.

12. Verfahren nach einem der Anspruche 8 bis 11, **dadurch gekennzeichnet, dass** in den Rohling (14, 15) zunächst Messerlücken (16, 17) eingebracht werden und daraufhin die Konturen der Messer (5, 6) erzeugt werden.

13. Verfahren nach Anspruch 12, **dadurch gekennzeichnet, dass** das Erzeugen der Messerkonturen ein Schleifen einer Messeraußenkontur (18, 21), ein Schleifen einer Messerinnenkontur (19, 22) und ein Abrunden von Messerspitzen (20, 23) der Messer (5,6) umfasst.

14. Verfahren nach einem der Anspruche 8 bis 13, **dadurch gekennzeichnet, dass** wenigstens die Messer (5, 6) außen beschichtet werden.
